# EUROPEAN PATENT APPLICATION

(11) **EP 3 483 821 A1**
(43) Date of publication of application: **15.05.2019**
(21) Application number: 17823914.1
(22) Date of filing: 02.06.2017
(51) Int. Cl.: G06Q 30/02, G07G 1/12

(54) **INFORMATION PRESENTATION DEVICE, INFORMATION PRESENTATION SYSTEM, AND INFORMATION PRESENTATION METHOD**

(30) Priority: 05.07.2016 JP 2016133623
(71) Applicant: Panasonic Intellectual Property Management Co., Ltd., Osaka-shi, Osaka 540-6207 (JP)
(72) Inventor: YAMAGUCHI, Koichiro, Osaka-shi, Osaka 540-6207 (JP); SHIN, Hidehiko, Osaka-shi, Osaka 540-6207 (JP); ITOH, Tomoaki, Osaka-shi, Osaka 540-6207 (JP); OKIMOTO, Yoshiyuki, Osaka-shi, Osaka 540-6207 (JP); FUKUI, Takayuki, Osaka-shi, Osaka 540-6207 (JP)
(74) Representative: Vigand, Philippe
(86) International application number: PCT/JP2017/020559
(87) International publication number: WO 2018/008307

(57) **Abstract**

An information presentation device includes an input unit that inputs a setting value for setting two periods to be compared, an acquisition unit that acquires information on a passage rate indicating a proportion of a number of people passing through each of a plurality of areas constituting an inside of a facility and sales information indicating a sales amount of an item in each of the areas, a difference calculator that calculates a difference in the passage rate between the two periods and a difference in the sales amount between the two periods, and a display unit that displays at least one of the difference in the passage rate and the difference in the sales amount.

## Description

### TECHNICAL FIELD

The present disclosure relates to an information presentation device, an information presentation system, and an information presentation method that present sales and a passage rate of a facility such as a store.

### BACKGROUND ART

PTL 1 discloses a salesroom integrated monitoring system that inputs information on an item such as details of the item, a position in a salesroom, a display state, and sales, and flow line information on a move of a visiting customer and the like and displays a list and a graph indicating a relationship between the sales of the item and a flow line of the visiting customer together with a salesroom floor map.

### Citation List

### Patent Literature

PTL 1: Unexamined Japanese Patent Publication No. 2004-118453

### SUMMARY OF THE INVENTION

The present disclosure provides an information presentation device, an information presentation system, and an information presentation method that effectively present sales and a passage rate of a facility such as a store.

An information presentation device according to the present disclosure includes an input unit that inputs a setting value for setting two periods to be compared, an acquisition unit that acquires information on a passage rate indicating a proportion of a number of people passing through each of a plurality of areas constituting an inside of a facility and sales information indicating a sales amount of an item or of a service in each of the areas, a difference calculator that calculates a difference in the passage rate between the two periods and a difference in the sales amount between the two periods, and a display unit that displays at least one of the difference in the passage rate and the difference in the sales amount.

An information presentation system according to the present disclosure includes a monitoring camera that outputs images resulting from imaging a facility including a plurality of areas, a purchase terminal device that generates and outputs purchase data indicating an item or a service purchased in the facility and a purchase amount, and the information presentation device that calculates a difference in a passage rate and a difference in a sales amount between two periods to be compared from area information indicating a position of each of the areas in the facility, people flow information indicating a flow of people in the facility, the people flow information being generated from the images output from the monitoring camera, purchase data of the facility output from the purchase terminal device, and position information indicating a position of an item or of a service placed in the facility and displays at least one of the difference in the passage rate and the difference in the sales amount.

An information presentation method according to the present disclosure includes causing an input unit to input a setting value for setting two periods to be compared, causing an acquisition unit to acquire information on a passage rate indicating a proportion of a number of people passing through each of a plurality of areas constituting an inside of a facility and sales information indicating a sales amount of an item or of a service in each of the areas, causing a difference calculator to calculate a difference in the passage rate between the two periods and a difference in the sales amount between the two periods, and causing a display unit to display at least one of the difference in the passage rate and the difference in the sales amount.

The information presentation device, the information presentation system, and the information presentation method of the present disclosure effectively present sales and a passage rate of a store.

### BRIEF DESCRIPTION OF THE DRAWINGS

FIG. 1 is a block diagram showing a configuration of an information presentation system of a first exemplary embodiment.
FIG. 2A is a table showing an example of flow line information.
FIG. 2B is a table showing an example of area information.
FIG. 2C is a table showing an example of transition probability information.
FIG. 3A is a table showing an example of POS data.
FIG. 3B is a table showing an example of position information.
FIG. 4 is a flowchart for describing an operation of calculating a difference in a sales amount and a difference in a passage rate according to the first exemplary embodiment.
FIG. 5A is a diagram showing a display example according to the first exemplary embodiment.
FIG. 5B is a diagram showing a display example according to the first exemplary embodiment.
FIG. 6 is a diagram showing a display example according to the first exemplary embodiment.
FIG. 7 is a diagram showing a display example according to another exemplary embodiment.
FIG. 8 is a diagram showing a display example of flow line information according to another exemplary embodiment.
FIG. 9 is a flowchart for describing an operation of calculating a difference in flow line information according to another exemplary embodiment.
FIG. 10 is a diagram showing a display example of flow line information on a plurality of people according to another exemplary embodiment.

### DESCRIPTION OF EMBODIMENTS

Hereinafter, exemplary embodiments will be described in detail with reference to the drawings as appropriate. However, detailed description beyond necessity may be omitted. For example, a detailed description of a well-known matter and a duplicate description of substantially the same configuration may be omitted. Such omissions are intended to prevent the following description from being unnecessarily redundant and to help those skilled in the art to easily understand the following description. Note that the inventors provide the attached drawings and the following description to help those skilled in the art to fully understand the present disclosure, and the attached drawings and the following description are not intended to limit the subject matters of the claims.

### (First exemplary embodiment)

An information presentation system of the present disclosure displays differences in a passage rate and in a sales amount of a store between two periods to be compared. At this time, the information presentation system changes a display mode for difference based on degrees of both the differences in the passage rate and in the sales amount of the store between the two periods to be compared.

### 1. Configuration

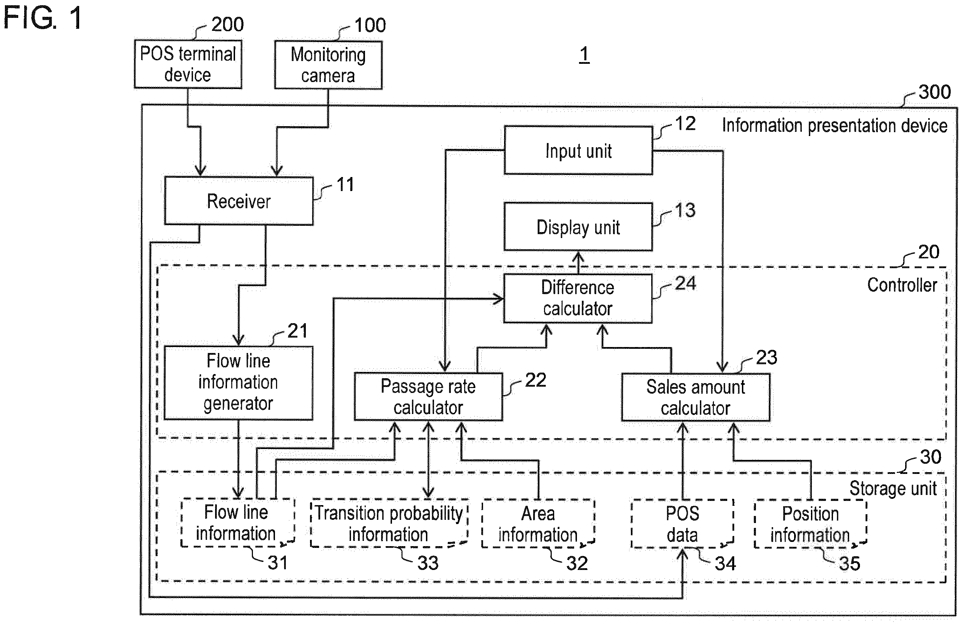

FIG. 1 shows a configuration of the information presentation system of a first exemplary embodiment. Information presentation system 1 includes at least one monitoring camera 100 that outputs images resulting from imaging an inside of a store, at least one point-of-sale (POS) terminal device 200 that generates and outputs POS data 34 indicating an item purchased in the store and a purchase amount, and information presentation device 300 that changes a display mode for difference based on degrees of both differences in a passage rate and in a sales amount of the store between two periods to be compared using the images output from monitoring camera 100 and POS data 34 output from POS terminal device 200 and displays the degrees of the differences.

Monitoring camera 100 includes an imaging unit such as a charge-coupled device (CCD) image sensor, a complementary metal oxide semiconductor (CMOS) image sensor, or an N-channel metal oxide semiconductor (NMOS) image sensor, and captures images of the inside of the store. Monitoring camera 100 further includes an interface circuit used for communication with an external device based on a predetermined communication standard (for example, a local area network (LAN) or WiFi) and outputs the images of the inside of the store thus captured.

POS terminal device 200 includes a barcode reader equipped with a scanner, a CCD, or a laser and generates POS data 34 indicating an item purchased by a person in the store and a purchase amount. POS terminal device 200 further includes an interface circuit used for communication with an external device based on a predetermined communication standard (for example, a LAN or WiFi) and outputs POS data 34 thus generated.

Information presentation device 300 includes receiver 11 that receives the images output from monitoring camera 100 and POS data 34 output from POS terminal device 200, input unit 12 that receives an input from a user, and display unit 13. Receiver 11 includes an interface circuit used for communication with an external device based on the predetermined communication standard (for example, a LAN or WiFi). Input unit 12 is, for example, a keyboard, a mouse, or a touch panel. Display unit 13 is, for example, a liquid crystal display.

Information presentation device 300 further includes controller 20 that controls a whole of information presentation device 300, and storage unit 30 that stores various pieces of information.

Controller 20 includes flow line information generator 21 that generates, from the images output from monitoring camera 100, flow line information (people flow information) 31 indicating a flow of people moving in a store. Traffic line information generator 21 identifies a person shown in the images and generates flow line information 31 indicating a location of the person identified on a time-series basis. Note that, in FIG. 1, flow line information generator 21 is included in controller 20 but may be configured separately from controller 20.

Controller 20 further includes passage rate calculator 22 that calculates a passage rate of each of a plurality of areas constituting an inside of a store, and sales amount calculator 23 that calculates a sales amount of each of the areas in the store. Passage rate calculator 22 calculates a passage rate of each of the areas in the store (a proportion of people who pass through each of the areas) from flow line information 31 and area information 32. Area information 32 corresponds to information indicating a range of each of the plurality of areas constituting the inside of the store. Note that passage rate calculator 22 is also capable of generating, from flow line information 31 and area information 32, transition probability information 33 indicating a probability of a move of a person between adjacent areas in the store and calculating the passage rate based on transition probability information 33. Sales amount calculator 23 calculates a sales amount of each of the areas based on position information 35 and POS data 34. Position information 35 corresponds to information indicating a position and a unit price of an item placed in the store. Passage rate calculator 22 and sales amount calculator 23 respectively calculate a passage rate and a sales amount in a period (a time, a date, a day of week, or the like) designated via input unit 12. In the present exemplary embodiment, a user designates two periods to be compared (a comparison source period and a comparison target period) via input unit 12.

Controller 20 further includes difference calculator 24 that calculates a difference in the passage rate between the comparison source period and the comparison target period, and a difference in the sales amount between the comparison source period and the comparison target period. Difference calculator 24 changes a display mode for difference based on degrees of the differences in the passage rate and in the sales amount thus calculated and causes display unit 13 to display the degrees of the differences.

Controller 20 can be configured with a semiconductor element or the like. A function of controller 20 may be implemented only by hardware or may be implemented by a combination of hardware and software. Controller 20 can be configured with, for example, a microcomputer, a central processing unit (CPU), a micro processing unit (MPU), a digital signal processor (DSP), a field-programmable gate array (FPGA), or an application specific integrated circuit (ASIC).

Storage unit 30 stores information received by controller 20 via receiver 11 and information generated by controller 20. For example, storage unit 30 stores flow line information 31, area information 32, transition probability information 33, POS data 34, and position information 35. Storage unit 30 can be configured with, for example, a random access memory (RAM), a dynamic random access memory (DRAM), a ferroelectric RAM, a flash memory, or a magnetic disk. Alternatively, storage unit 30 can be configured with any combination of a RAM, a DRAM, a ferroelectric RAM, a flash memory, and a magnetic disk.

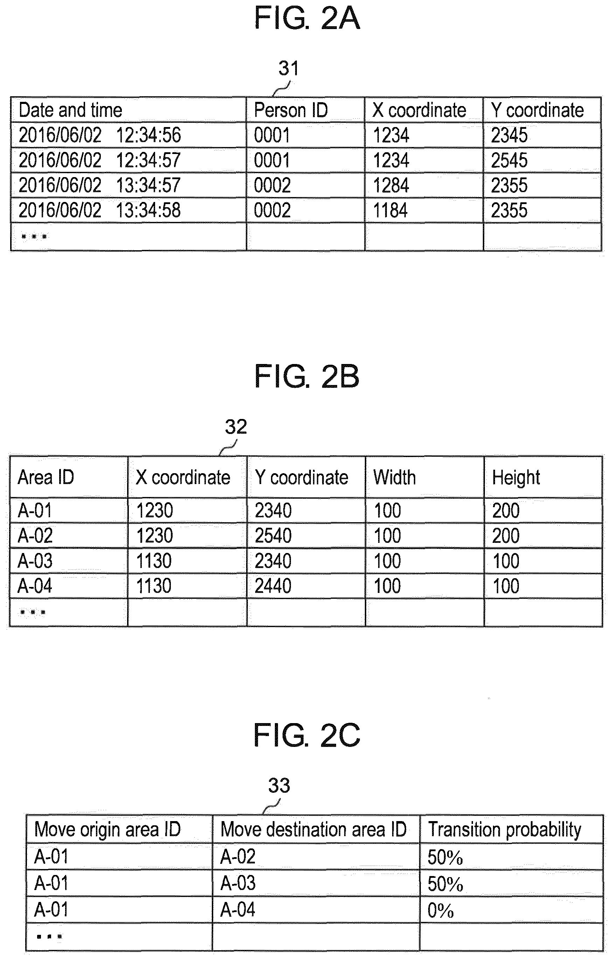

FIG. 2A shows an example of flow line information 31 generated by flow line information generator 21. Traffic line information 31 includes identification information (ID) on a person, and information on where the person is located (an X coordinate and a Y coordinate) and when the location of the person is extracted. FIG. 2B shows an example area information 32. Area information 32 includes identification information (ID) on each of the areas in the store and information on a range (an X coordinate, a Y coordinate, a width, and a height) of each of the areas. FIG. 2C shows an example of transition probability information 33 indicating a transition probability calculated based on flow line information 31 and area information 32. Transition probability information 33 includes an ID of a move origin area, an ID of a move destination area, and a transition probability. Passage rate calculator 22 calculates a transition probability for each move destination allowable area from, for example, "transition probability = a number of people who move to the move destination allowable area adjacent to the move origin area/a number of people located in the move origin area" to generate transition probability information 33.

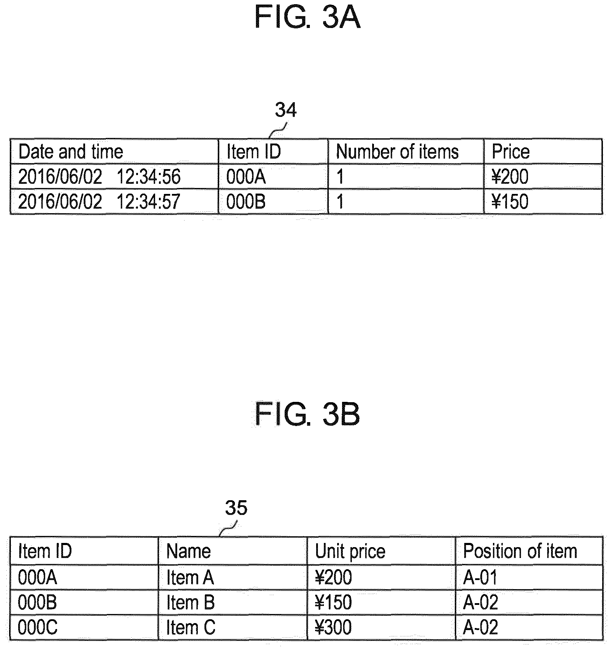

FIG. 3A shows an example of POS data 34 that is generated and output by POS terminal device 200. POS data 34 includes identification information (ID) on an item purchased, a number of the items, a price of the item, and information on a date and time when the item is purchased. FIG. 3B shows an example of position information 35. Position information 35 includes identification information (ID) on an item, a name of the item, a unit price of the item, and information on where the item is placed (an ID of an area where the item is placed).

### 2. Operation

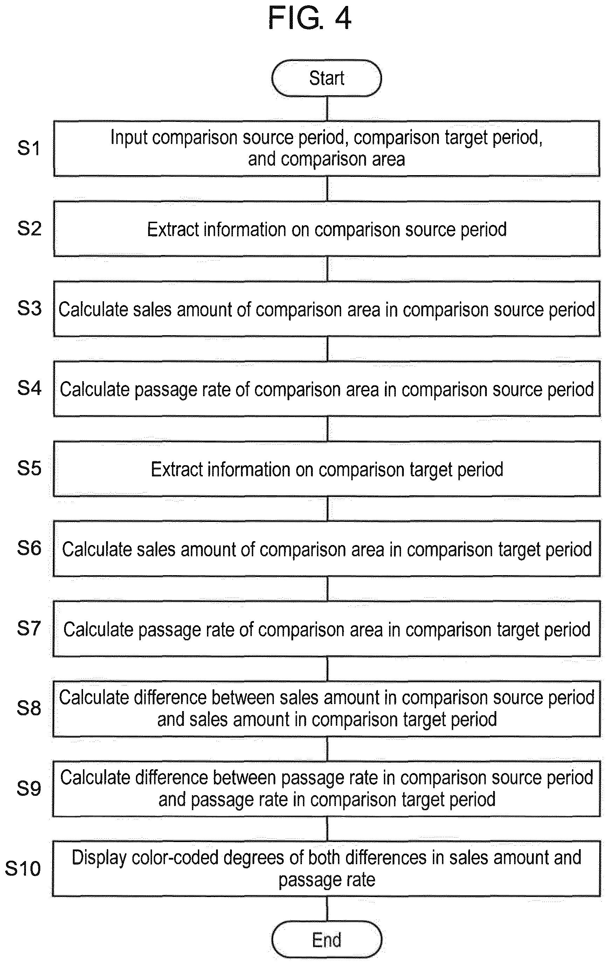

FIG. 4 shows an operation of controller 20 by which differences in the passage rate and in the sales amount are calculated. First, a user inputs two periods to be compared (the comparison source period and the comparison target period) and at least one of the plurality of areas in the store, which is desired by the user to compare, to input unit 12. At this time, the user may designate each of the areas resulting from dividing the inside of the store as indicated by area information 32 as a range of a comparison area. Alternatively, the user may designate some of the areas resulting from dividing the inside of the store as indicated by area information 32 as a range of one comparison area. Controller 20 inputs, via input unit 12, the comparison source period, the comparison target period, and the range of the comparison area designated by the user (step S1).

Passage rate calculator 22 and sales amount calculator 23 each extract information on the comparison source period based on the user's input (step S2). Specifically, passage rate calculator 22 extracts information corresponding to the comparison source period from flow line information 31, and sales amount calculator 23 extracts information corresponding to the comparison source period from POS data 34.

Sales amount calculator 23 calculates a sales amount of each comparison area in the comparison source period designated by the user (step S3). Sales amount calculator 23 calculates a total purchase amount (sales amount) of items placed in each area by, for example, extracting "price" of sales from POS data 34 based on "item ID" of an item placed in an area indicated by "position of item" of position information 35.

Passage rate calculator 22 calculates a passage rate of each comparison area in the comparison source period designated by the user (step S4). Passage rate calculator 22 identifies an area through which a person passes based on, for example, a location of the person (an X coordinate and a Y coordinate) of flow line information 31 and a range of the area (an X coordinate, a Y coordinate, a width, and a height) of area information 32 and calculates the passage rate of each comparison area from "passage rate = a number of people passing through the area/a number of people located in the store".

Passage rate calculator 22 and sales amount calculator 23 each extract information on the comparison target period based on the user's input (step S5). Specifically, passage rate calculator 22 extracts information corresponding to the comparison target period from flow line information 31, and sales amount calculator 23 extracts information corresponding to the comparison target period from POS data 34. Sales amount calculator 23 calculates a sales amount of each comparison area in the comparison target period designated by the user (step S6). Passage rate calculator 22 calculates a passage rate of each comparison area in the comparison target period designated by the user (step S7).

Difference calculator 24 calculates a difference in the sales amount between the comparison source period and the comparison target period (step S8) and calculates a difference in the passage rate between the comparison source period and the comparison target period (step S9). Difference calculator 24 causes display unit 13 to display respective values indicating the difference in the sales amount and the difference in the passage rate together with the areas on the screen, some or all of the areas being color-coded based on degrees of both the differences in the sales amount and in the passage rate (step S10).

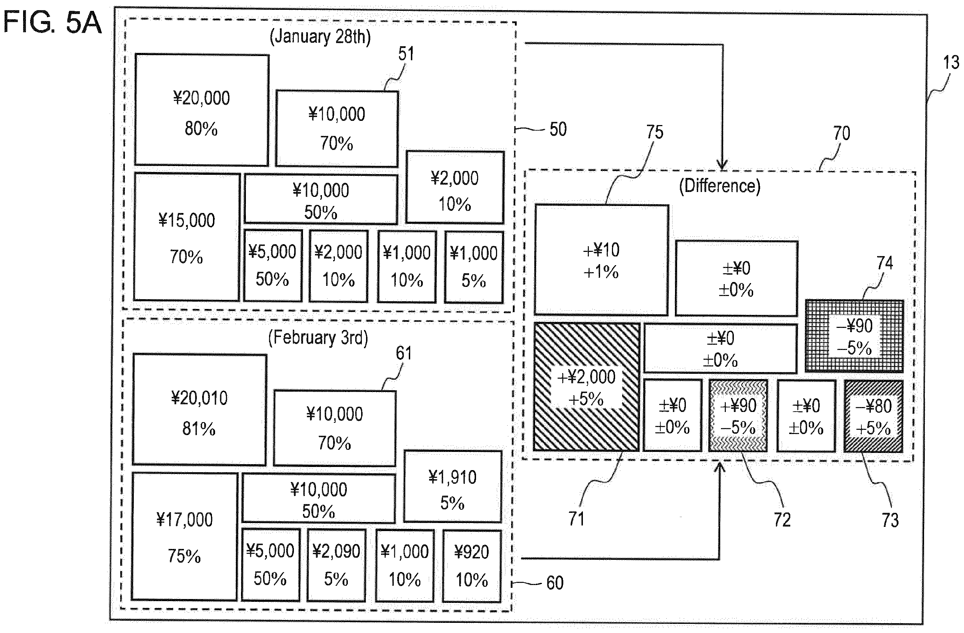

FIG. 5A shows a display example of a difference calculation result displayed by display unit 13. FIG. 5A shows an example where nine comparison areas 51, 61 are designated in step S1 of FIG. 4, January 28th is selected as the comparison source period, and February 3rd is selected as the comparison target period. Display unit 13 displays map 50 of an area for the comparison source period (January 28th) on an upper left side of the screen, displays map 60 of an area for the comparison target period (February 3rd) on a lower left side of the screen, and displays map 70 of an area for difference results on a right side of the screen. Display unit 13 displays respective values of the sales amount and the passage rate in each comparison area on map 50 for the comparison source period (January 28th) and on map 60 for the comparison target period (February 3rd) and displays respective values of differences in the sales amount and in the passage rate in each comparison area on map 70 for difference results.

In addition, display unit 13 displays each of the difference results in accordance with a display mode for difference result (a color in the present exemplary embodiment) that is changed in accordance with degrees of the differences as described in the following (a) to (e).

(a) An area where the passage rate increases by a first predetermined value (for example, 5%) or greater and the sales amount increases by a second predetermined value (for example, 50 yen) or greater is colored in green (refer to area 71).
(b) An area where the passage rate decreases by a third predetermined value (for example, 5%) or greater and the sales amount increases by the second predetermined value or greater is colored in blue (refer to area 72).
(c) An area where the passage rate increases by the first predetermined value or greater and the sales amount decreases by a fourth predetermined value (for example, 50 yen) or greater is colored in yellow (refer to area 73).
(d) An area where the passage rate decreases by the third predetermined value or greater and the sales amount decreases by the fourth predetermined value or greater is colored in red (refer to area 74).
(e) An area other than areas (a) to (d) is colored in white (refer to area 75).

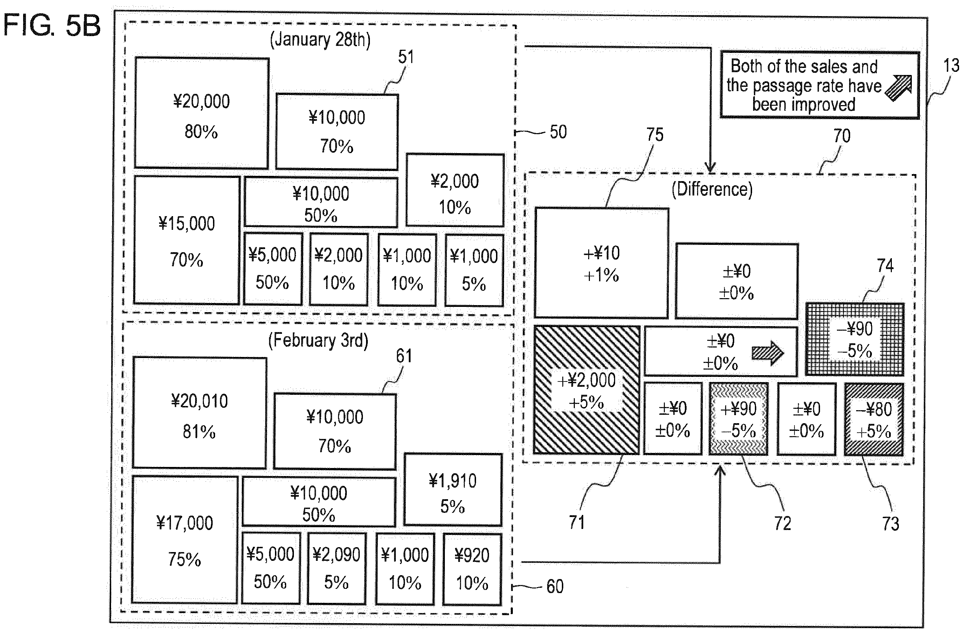

FIG. 5B is a display example where another display element is added to the display of FIG. 5A. In FIG. 5B, at an upper right, characters indicating "Both of the sales and the passage rate have been improved" and an arrow pointing in an upper right direction at angle of about 45° are displayed. These display elements are not displayed all the time but displayed, for example, when area 71 is selected with a cursor. This is because both differences in the sales and in the passage rate increase in area 71, which indicates that the sales and the passage rate have been improved.

Similarly, when area 72 is selected with the cursor, "The sales have been improved, but the passage rate has been worsened" is displayed, and when area 74 is selected, "Both the sales and the passage rate have been worsened" is displayed. Furthermore, in addition to these character displays, an arrow is displayed, a direction of the arrow being changed in accordance with a degree of improvement. For example, when both the sales and the passage rate are improved, an arrow having an angle of 45° is displayed, when either the sales or the passage rate is improved, an arrow having an angle of 30° is displayed, when neither the sales nor the passage rate is changed, an arrow having an angle of 0° (horizontal direction) is displayed, and when both the sales and the passage rate are worsened, an arrow having an angle of -45° is displayed.

Furthermore, the direction of the arrow is changed in accordance with a degree of improvement, and when there is a layout margin, the arrow may be displayed all the time in each area. When there is a layout margin, characters may also be displayed all the time in each area.

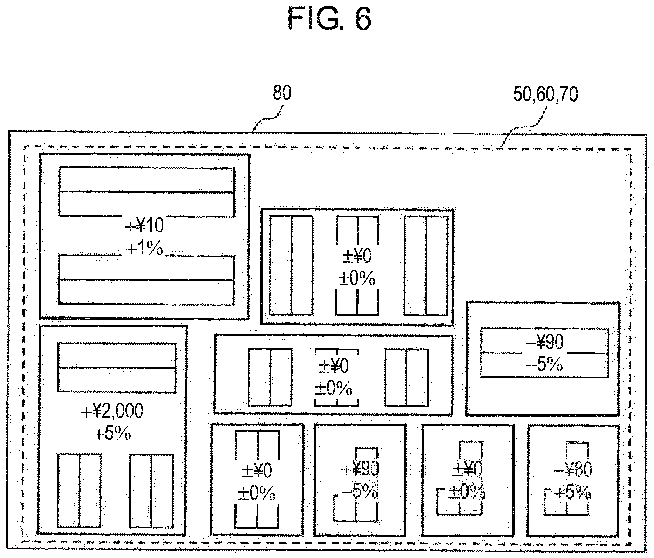

As shown in FIG. 6, display unit 13 displays map 50 for the comparison source period (January 28th), map 60 for the comparison target period (February 3rd), and map 70 for difference results with each of the maps superimposed on layout image 80 representing a sales floor of a store.

### 3. Effects and the like

According to information presentation system 1 of the present exemplary embodiment, some or all of the comparison areas on the screen are color-coded based on degrees of the differences in the passage rate and in the sales amount of each of the comparison areas in the store, which makes it possible to easily recognize degrees of fluctuations in the passage rate and in the sales amount of each of the comparison areas only through a check of a color of each of the comparison areas. Accordingly, for example, fluctuations in the passage rate and in the sales amount between before and after a measure to improve a sales floor is taken can be easily recognized.

Information presentation system 1 of the present disclosure can be configured with, for example, cooperation between a hardware resource such as a processor and a memory and a program.

Note that, in the present exemplary embodiment, POS data 34 is output from POS terminal device 200. Alternatively, purchase data indicating an item or a service purchased and a purchase amount may be output from a different purchase terminal device.

### (Other exemplary embodiments)

The first exemplary embodiment has been described above as an illustration of the technique disclosed in the present application. However, the technique in the present disclosure is not limited to the exemplary embodiment and is applicable to exemplary embodiments in which changes, replacements, additions, omissions, or the like are made as appropriate. Furthermore, the components described in the first exemplary embodiment can be combined to form a new exemplary embodiment. Therefore, other exemplary embodiments will be illustrated below.

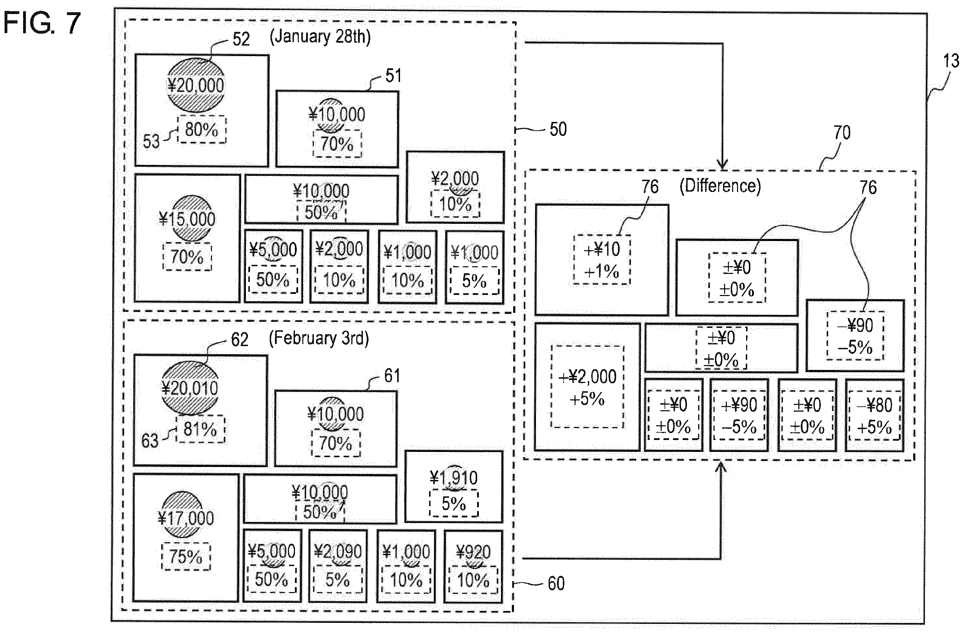

In the first exemplary embodiment, a color indicating each comparison area is changed based on degrees of differences in the passage rate and in the sales amount. Alternatively, the degrees of differences may be represented by a method other than the color-coded display as long as the degrees of differences can be differentiated from each other. For example, instead of a color, a hatching pattern may be changed. Furthermore, as shown in FIG. 7, the degrees of differences in the passage rate and in the sales amount may be represented by a predetermined figure 76 (such as a polygon or a circle) in each comparison area, and a size, a color, or a shape of predetermined figure 76 may be changed in accordance with the degrees of differences in the passage rate and in the sales amount.

Furthermore, on map 50 for the comparison source period and map 60 for the comparison target period, a value corresponding to the sales amount may be shown together with predetermined figure 52, 62 (such as a circle or a polygon), and a size, a color, or a shape of predetermined figure 52, 62 (such as a circle or a polygon) may be changed in accordance with how much the sales amount is. Moreover, a value corresponding to the passage rate may be shown together with predetermined figure 53, 63 (such as a circle or a polygon), and a size, a color, or a shape of predetermined figure 53, 63 (such as a circle or a polygon) may be changed in accordance with a degree of the passage rate.

Furthermore, in the first exemplary embodiment, the degrees of differences in the passage rate and in the sales amount are color-coded in five colors based on four thresholds, that is, the first predetermined value to the fourth predetermined value, but a number of options for changing the display mode is not limited to five. The number of options for changing the display mode for difference (for example, a color, hatching, a size, and a shape) may be optionally determined in accordance with degrees of differences in the passage rate and in the sales amount.

In the first exemplary embodiment, passage rate calculator 22 calculates the passage rate from flow line information 31 and area information 32. Alternatively, receiver 11 may acquire the passage rate information indicating the passage rate of each of the areas in the store from the outside. In this configuration, receiver 11 serves as an acquisition unit that acquires the passage rate information. Furthermore, the passage rate information acquired via receiver 11 may be prestored into storage unit 30. In this configuration, passage rate calculator 22 serves as an acquisition unit that acquires the passage rate information stored in storage unit 30. In the first exemplary embodiment, sales amount calculator 23 calculates the sales amount based on position information 35 and POS data 34. Alternatively, receiver 11 may acquire the sales information indicating the sales amount of each of the areas in the store from the outside. In this configuration, receiver 11 serves as an acquisition unit that acquires the sales information. Furthermore, the sales information acquired via receiver 11 may be prestored into storage unit 30. In this configuration, sales amount calculator 23 serves as an acquisition unit that acquires the sales information stored in storage unit 30.

In the first exemplary embodiment, the flow line information and the transition probability information are generated from the images output from monitoring camera 100. Alternatively, the flow line information and the transition probability information may be input by a user, or a constant value, an average value, or the like may be used as the flow line information and the transition probability information.

In the first exemplary embodiment, the degrees of differences in the passage rate and in the sales amount of the store are displayed, but information to be displayed for the differences is not limited to the passage rate and the sales amount of the store. Furthermore, a number of pieces of information to be displayed for the differences is not limited to two. The method of the present disclosure is applicable to a case where the display mode is changed in accordance with degrees of differences in a plurality of pieces of information.

For example, flow line information 31 may be input into difference calculator 24, and a difference in flow line information 31 may be displayed on display unit 13. A detailed description will be given below of an example where the difference in flow line information 31 is displayed on display unit 13.

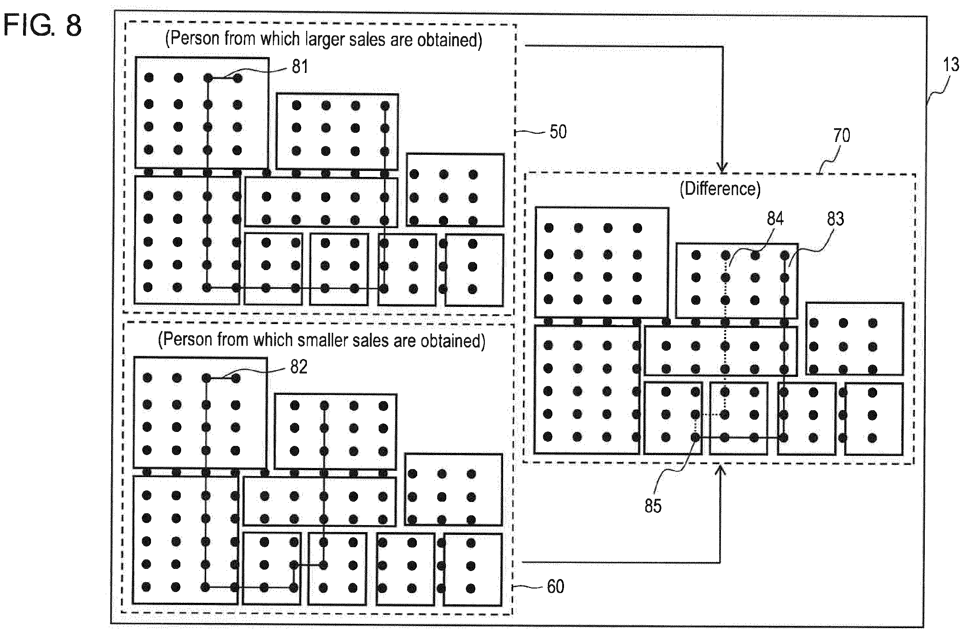

FIG. 8 shows a display example of the difference in flow line information 31 displayed by display unit 13. For example, coordinates in flow line information 31 as shown in FIG. 2A are represented by black dots of FIG. 8, and a move from one coordinate to another coordinate is represented by a line (a flow line) that connects respective black dots. FIG. 8 shows flow line information on a person from which larger sales are obtained at a given date is represented by flow line 81, and flow line information on a person from which smaller sales are obtained is represented by flow line 82. Note that flow lines 81, 82 can be displayed in a comparable manner based on classifications such as not only sales but also a gender or an age.

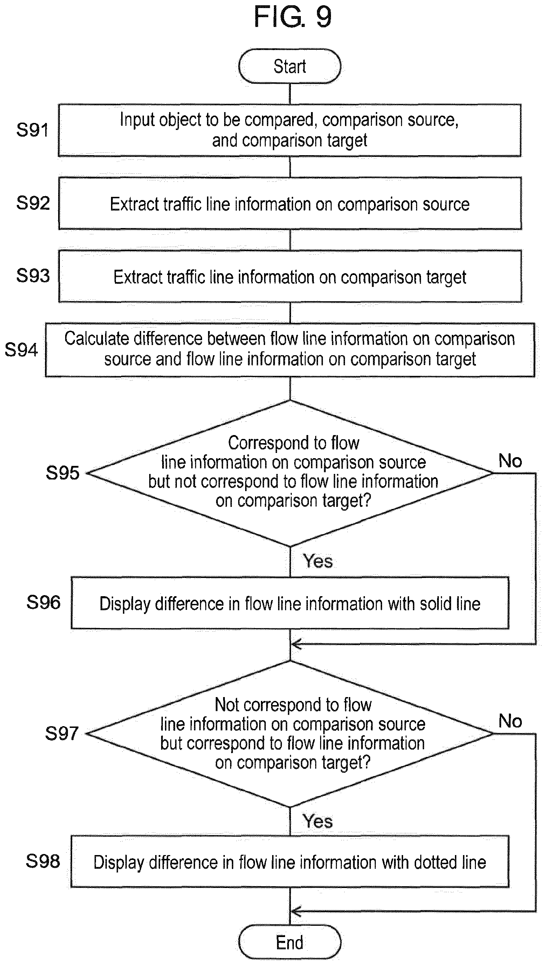

FIG. 9 shows an operation of controller 20 by which the difference in flow line information is calculated. First, the user inputs, into input unit 12, an object to be compared (herein, a flow line) and two levels for the object to be compared (a comparison source and a comparison target, for example, a person from which larger sales are obtained and a person from which smaller sales are obtained). Controller 20 inputs, via input unit 12, the object to be compared, and the comparison source and the comparison target designated by the user (step S91). Difference calculator 24 extracts, based on the user's input, flow line information of the comparison source from flow line information 31 in storage unit 30 (step S92) and flow line information of the comparison target (step S93).

Difference calculator 24 calculates a difference in the flow line information between the comparison source and the comparison target (step S94). Accordingly, a different flow line (herein, a flow line included in only one of either the comparison source or the comparison target) can be extracted. Difference calculator 24 determines whether a flow line indicating the difference thus calculated corresponds to a flow line indicated by the flow line information of the comparison source or a flow line indicated by the flow line information of the comparison target and then changes a display mode for flow line (steps S95 to S98). Specifically, difference calculator 24 first determines whether the flow line indicating the difference calculated corresponds to the flow line indicated by the flow line information of the comparison source and does not correspond to the flow line indicated by the flow line information of the comparison target (step S95). In a case where the flow line corresponds to the flow line indicated by the flow line information of the comparison source and does not corresponds to the flow line indicated by the flow line information of the comparison target, difference calculator 24 displays, on display unit 13, the difference in the flow line information with a solid line (step S96). Difference calculator 24 determines whether the flow line indicating the difference calculated does not correspond to the flow line indicated by the flow line information of the comparison source and corresponds to the flow line indicated by the flow line information of the comparison target (step S97). In a case where the flow line does not correspond to the flow line indicated by the flow line information of the comparison source and corresponds to the flow line indicated by the flow line information of the comparison target, difference calculator 24 displays, on display unit 13, the difference in the flow line information with a dotted line (step S98).

The operation shown in FIG. 9 causes display unit 13 to display difference flow line 83 and difference flow line 84 that respectively indicate a difference in the flow line information of the comparison source and a difference in the flow line information of the comparison target as shown in FIG. 8. Difference flow line 83 is a display example of the difference when the determination is made that the flow line corresponds to the flow line indicated by the flow line information of the comparison source and does not correspond to the flow line indicated by the flow line information of the comparison target in step S96, and difference flow line 84 is a display example of the difference when the determination is made that the flow line does not correspond to the flow line indicated by the flow line information of the comparison source and corresponds to the flow line indicated by the flow line information of the comparison target in step S97. In FIG. 8, difference flow line 83 corresponds to a flow line of a person from which a larger sales amount is obtained, and difference flow line 84 corresponds to a flow line of a person from which a smaller sales amount is obtained. Therefore, the user may propose, for example, a measure to lure people to difference flow line 83 such as providing a signage display at point 85 in order to increase the sales amount. Alternatively, the user may propose an arrangement of high-end items or better-selling items on difference flow line 84.

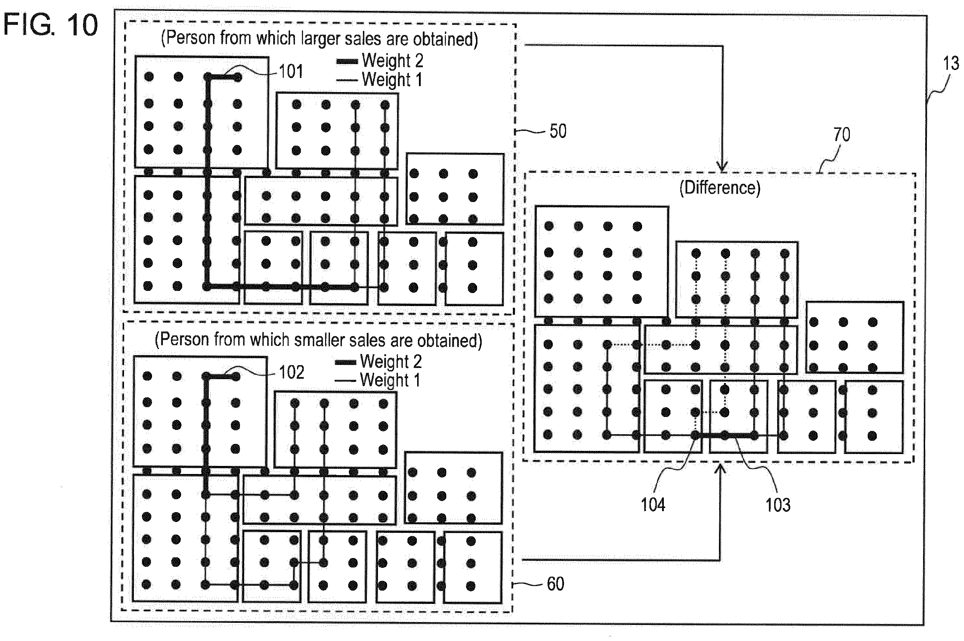

FIG. 8 shows a display example where a difference is shown between a single person from which larger sales are obtained and a single person from which smaller sales are obtained. Alternatively, a difference may be shown between a plurality of people from which larger sales are obtained and a plurality of people from which smaller sales are obtained. FIG. 10 shows a display example of differences in the flow line information on a plurality of people. In a case where flow lines of the plurality of people are displayed, a value indicating a number of people can be defined as a weight of a flow line. In FIG. 10, a flow line corresponding to a number of people that is equal to or greater than a predetermined number is represented by a thick line that corresponds to a weight of "2", and a flow line corresponding to a number of people that is less than the predetermined number is represented by a thin line that corresponds to a weight of "1". Traffic line 101 and flow line 102 are represented by a combination of the thick line and the thin line. Note that the weight may be the number of people itself. Alternatively, for example, the weight may be a value calculated based on the number of people such as a proportion of the number of people or may be a value calculated from the transition probability or the passage rate. In this configuration, a difference between weight values is calculated as a difference between flow line 101 and flow line 102, and a weight resulting from the calculation may be shown. In FIG. 10, difference flow line 103 has a weight of 2 even after the difference calculation, which proves that a measure to lure people to difference flow line 103 at point 104 is more effective.

The components shown in the attached drawings and described in the detailed description may include, for the illustration of the above-described technique, not only components essential for the solution to the problem but also components not essential for the solution to the problem. Thus, it should not be immediately deemed that, merely based on the fact that the components that are not essential are shown in the attached drawings and described in the detailed description, the components that are not essential are essential.

Furthermore, since the aforementioned exemplary embodiments are intended to illustrate the technique in the present disclosure, various changes, replacements, additions, omissions, or the like can be made within the scope of the claims and their equivalents.

Note that, in the first exemplary embodiment, a description has been given on the assumption that things to be handled in the store are items. However, things for transaction with customers include not only items but also services. Of such stores, a barber shop or a game arcade does not sell items, but makes transaction with customers by providing the customers with opportunities of having haircuts or enjoying playing games. These activities are services, and implementing the content of the present disclosure also allows for presentation of information on sales gained through such services.

Furthermore, examples of such a facility include not only a store but also a shopping mall (shopping area) where a plurality of stores are located together and a theme park where a plurality of various attractions are located together. The information presentation device according to the present disclosure can be used for such a shopping mall or a theme park.

For example, in a case where the information presentation device according to the present disclosure is used for a shopping mall, the information presentation device includes: an input unit that inputs a setting value for setting two periods to be compared; an acquisition unit that acquires information on a passage rate indicating a proportion of people passing through each of a plurality of areas constituting an inside of the shopping mall and sales information indicating a sales amount of an item or a service in each of the areas; a difference calculator that calculates respective differences in the passage rate and in the sales amount between the two periods; and a display unit that displays at least one of the differences in the passage rate and in the sales amount.

The use of such an information presentation device allows for presentation of information on sales in a shopping mall.

In a case where the information presentation device according to the present disclosure is used for a theme park, the information presentation device includes: an input unit that inputs a setting value for setting two periods to be compared, an acquisition unit that acquires information on a passage rate indicating a proportion of people passing through each of a plurality of areas constituting an inside of the theme park and use information indicating a number of users who use an attraction in each of the areas; and a display unit that displays at least one of the differences in the passage rate and in the number of users between the two periods.

The use of such an information presentation device allows for presentation of users of attractions in a theme park.

Moreover, the content of the present disclosure can also be implemented for a case where transactions of items or services are made over the Internet. For example, the content of the present disclosure helps a conversion rate to increase in Internet transactions made with the help of an information technology (IT) (for example, a computer). Conversion refers to purchase of an item or of a service through, for example, Internet shopping. Further, the conversion rate refers to a proportion of a number of people who have actually purchased a certain item or service to a number of people who have visited a sales site for the certain item or service. The use of the information presentation system according to the present disclosure allows an increase in conversion rate. Note that, with a case where the item or service is not actually purchased but member registration or a request for a brochure is made at the site set as the conversion rate, the information presentation device according to the present disclosure can be used.

### INDUSTRIAL APPLICABILITY

The present disclosure is applicable to an information presentation device, an information presentation system, and an information presentation method that present sales and a passage rate of a facility such as a store.

### REFERENCE MARKS IN THE DRAWINGS

- 1: information presentation system
- 11: receiver
- 12: input unit
- 13: display unit
- 20: controller
- 21: flow line information generator
- 22: passage rate calculator
- 23: sales amount calculator
- 24: difference calculator
- 30: storage unit
- 100: monitoring camera
- 200: POS terminal device
- 300: information presentation device

## Claims

1. An information presentation device comprising:
an input unit that inputs a setting value for setting two periods to be compared;
an acquisition unit that acquires information on a passage rate indicating a proportion of a number of people passing through each of a plurality of areas constituting an inside of a facility and sales information indicating a sales amount of an item or of a service in each of the areas;
a difference calculator that calculates a difference in the passage rate between the two periods and a difference in the sales amount between the two periods; and
a display unit that displays at least one of the difference in the passage rate and the difference in the sales amount.

2. The information presentation device according to claim 1, wherein the display unit changes a display mode for difference based on degrees of both the differences in the passage rate and the sales amount.

3. The information presentation device according to claim 2, wherein the display unit changes the display mode for difference in accordance with an increase or a decrease in the passage rate and an increase or a decrease in the sales amount when a comparison source and a comparison target in the two periods are compared.

4. The information presentation device according to claim 2 or 3, wherein the change in the display mode for difference is a change in color indicating each of the areas, or a change in color or size of a figure indicating a degree of the difference.

5. The information presentation device according to any one of claims 1 to 4, wherein
the acquisition unit includes:
a passage rate calculator that calculates, based on area information indicating a position of each of the plurality of areas constituting the inside of the facility and people flow information indicating a flow of people moving in the facility, a proportion of a number of people passing through each of the areas to generate the information on the passage rate, and
a sales amount calculator that calculates, based on position information indicating a position of an item or of a service placed in the facility and purchase data indicating a purchase amount of an item or of a service purchased in the facility, a sales amount of an item or of a service in each of the areas to generate the sales information.

6. The information presentation device according to claim 1, wherein the facility is a single store.

7. The information presentation device according to claim 1, wherein the facility is a shopping mall where a plurality of stores are located together.

8. The information presentation device according to claim 1, wherein the facility is a theme park where a plurality of attractions are located together.

9. An information presentation device comprising:
an input unit that inputs a setting value for setting two periods to be compared;
an acquisition unit that acquires information on a passage rate indicating a proportion of a number of people passing through each of a plurality of areas constituting an inside of a shopping mall and sales information indicating a sales amount of an item or of a service in each of the areas;
a difference calculator that calculates a difference in the passage rate between the two periods and a difference in the sales amount between the two periods; and
a display unit that displays at least one of the difference in the passage rate and the difference in the sales amount.

10. An information presentation device comprising:
an input unit that inputs a setting value for setting two periods to be compared;
an acquisition unit that acquires information on a passage rate indicating a proportion of a number of people passing through each of a plurality of areas constituting an inside of a theme park and use information indicating a number of users of an attraction in each of the areas;
a difference calculator that calculates a difference in the passage rate between the two periods and a difference in the number of users between the two periods; and
a display unit that displays at least one of the difference in the passage rate between the two periods and the difference in the number of users between the two periods.

11. An information presentation system comprising:
a monitoring camera that outputs images resulting from imaging a facility including a plurality of areas;
a purchase terminal device that generates and outputs purchase data indicating an item or a service purchased in the facility and a purchase amount; and
the information presentation device according to claim 5 that calculates a difference in a passage rate and a difference in a sales amount between two periods to be compared from area information indicating a position of each of the areas in the facility, people flow information indicating a flow of people in the facility, the people flow information being generated from the images output from the monitoring camera, purchase data of the facility output from the purchase terminal device, and position information indicating a position of an item or of a service placed in the facility and displays at least one of the difference in the passage rate and the difference in the sales amount.

12. An information presentation method comprising:
causing an input unit to input a setting value for setting two periods to be compared;
causing an acquisition unit to acquire information on a passage rate indicating a proportion of a number of people passing through each of a plurality of areas constituting an inside of a facility and sales information indicating a sales amount of an item or of a service in each of the areas;
causing a difference calculator to calculate a difference in the passage rate between the two periods and a difference in the sales amount between the two periods; and
causing a display unit to display at least one of the difference in the passage rate and the difference in the sales amount.

13. The information presentation method according to claim 12, wherein the causing the display unit to display changes a display mode for difference based on degrees of both the differences in the passage rate and the sales amount.
